# EUROPÄISCHE PATENTANMELDUNG

(11) **EP 4 793 495 A1**
(43) Veröffentlichungstag der Anmeldung: **19.08.2026**
(21) Anmeldenummer: 25157656.7
(22) Anmeldetag: 13.02.2025
(51) Int. Cl.: F03D 13/20, E04H 12/08

(54) **WINDENERGIEANLAGEN-STAHLTURMSEKTION**

(71) Anmelder: Wobben Properties GmbH, 26607 Aurich (DE)
(72) Erfinder: Kersten, Roy, 39291 Hohenwarthe (DE)
(74) Vertreter: Eisenführ Speiser

(57) **Zusammenfassung**

Die Erfindung betrifft eine Windenergieanlagen-Stahlturmsektion (1), vorzugsweise Turmkopfsektion, mit einer Wand (3), die auf einer vorbestimmten Höhe (H) einen Innendurchmesser (D_{I}) aufweist. Es wird vorgeschlagen, dass eine Manschette (10) im Inneren der Stahlturmsektion (1) auf der vorbestimmten Höhe (H) angeordnet ist, und einen ringförmigen Trägerkörper (11) mit einem Außendurchmesser (d_{AT}) aufweist, welcher geringer ist als der Innendurchmesser (D_{I}), sowie mehrere umfänglich am Trägerkörper (11) verteilt angeordnete Druckelemente (13), die sich in radialer Richtung am Trägerkörper (11) einerseits und an dem Innendurchmesser (D_{I}) der Wand (3) andererseits abstützen und die Stahlturmsektion (1) versteifen.

## Beschreibung

Die vorliegende Erfindung betrifft eine Windenergieanlagen-Stahlturmsektion, vorzugsweise Turmkopfsektion, mit einer Wand, die auf einer vorbestimmten Höhe einen Innendurchmesser aufweist.

Türme von Windenergieanlagen dienen dazu, die Gondel der Windenergieanlage, welche die sich drehende Nabe und zumeist auch die elektrische Maschine trägt, in der für den jeweiligen Errichtungsort vorgesehenen Höhe stabil zu halten. Die Türme der Windenergieanlagen sind aus einer Vielzahl von Turmsegmenten gebaut, wobei ein oder mehrere Turmsegmente eine Turmsektion ausbilden.

Im Stand der Technik sind grundsätzlich Turmsegmente und/oder Turmsektionen bekannt, die aus Stahl ausgebildet sind, oder Stahl umfassen, oder aus Beton, insbesondere Stahlbeton und/oder Spannbeton, ausgebildet sind. Es sind auch Türme von Windenergieanlagen bekannt, die sowohl Stahlsegmente und/oder Stahlsektionen, als auch Betonsegmente und/oder Betonsektionen enthalten. Jene werden als Hybridtürme bezeichnet.

Der Turm einer Windenergieanlage wird üblicherweise über mehrere Jahrzehnte betrieben. Er ist in aller Regel nicht austauschbar und insofern für eine vergleichsweise lange Lebensdauer auszulegen. Ein solcher Turm, insbesondere ein Windenergieanlagenturm, trägt allerdings zu einem erheblichen Teil zu den Gesamtkosten der Herstellung und Errichtung der Windenergieanlage bei.

Es ist daher grundsätzlich ein Bestreben in der Konstruktion der Windenergieanlage insgesamt, auch die Stahlturmsektion dahingehend zu optimieren, dass sie die erforderlichen Kräfte über die vorgeschriebene Lebensdauer zuverlässig tragen kann, hierbei aber möglichst wenig Eigengewicht aufweist und möglichst günstig hergestellt werden kann.

Bei Stahlturmsektionen trägt eine lastoptimierte Reduzierung der Wandstärken zu einer Gewichtsersparnis und damit Kostenersparnis bei.

Eine Herausforderung bei Turmsektionen allgemein ist die asymmetrische Einbringung von Kräften in die Turmsektion. Im errichteten Zustand steht der Turm im Wesentlichen vertikal, d. h. die Längsachse der Turmsektion ist in etwa vertikal ausgerichtet. Auf die Turmsektion wirken die Gewichtskraft der Gondel, sowie von der Gondel verursachte statische und dynamische Biegebeanspruchungen. Diese Biegebeanspruchungen werden zum Teil durch die wirkende Windlast erzeugt, zu einem wesentlichen Teil allerdings auch durch die asymmetrische Konstruktion in der Windenergieanlagengondel, insbesondere bei direkt angetriebenen Generatoren, d. h. getriebelosen Generatoren.

Es ist im Betrieb von Windenergieanlagen mit Stahlturmsektionen vereinzelt beobachtet worden, dass sich die Querschnittsform der Turmsektion relativ zu ihrem Grundzustand im Laufe des Betriebs ändert. Auf der vorbestimmten Höhe ist beispielsweise in Stahlturmsektionen bei routinemäßigen Überprüfungen eine Ovalisierung der Wand der Stahlturmsektion festgestellt worden. Wenn diese Ovalisierung im Bereich von Bauelementen auftritt, die im Inneren des Turms der Windenergieanlage an der Turmwand befestigt sind, beispielsweise an Arbeitspodesten, wie etwa einem Lüftausstiegspodest, ist in Einzelfällen beobachtet worden, dass zusätzliche Belastungen in Form von Kraft- und Spannungseintrag in die Verbindungen zwischen den Bauelementen und der Turmwand bzw. Turmschale auftreten. Die aufgrund der asymmetrischen Belastung auftretende Turmovalisierung, oder allgemeiner Verformung, ist daher ein potentielles Sicherheitsrisiko.

Es ist im Stand der Technik bislang der Ansatz verfolgt worden, diesem Risiko zu begegnen, indem die Art der Schraubverbindung solcher Strukturen, wie etwa im Turm eingebauter Podeste durch Verwendung von Verbindungen mit Los- und Festlagern, beispielsweise Langlöchern, oder von Konsolverbindungen, die in radialer Richtung nachgiebig sind, und/oder durch Verwendung besonders fester Schraubentypen zu begegnen.

Es ist ferner der Ansatz verfolgt worden, in dem Bereich der Stahlturmsektion, in der die Krafteinleitung stattfindet, meist am oberen Ende der obersten Stahlturmsektion der Windenergieanlage, die direkt unterhalb der Gondel und damit zumeist eines Maschinenträgers angeordnet ist, eine die Stahlturmsektion aussteifende Stahlscheibe einzuschweißen. Aufgrund der hohen Belastung der Turmwand in der Stahlturmsektion an den Stellen, wo die Versteifung eingeführt werden soll, ist angesichts der aufgrund der Gewichtsoptimierung bereits reduzierten Wandstärken besondere Sorgfalt hinsichtlich der Dimensionierung und Ausführung der Schweißnähte geboten, weil auch die Kerbfälle bei der Berechnung berücksichtigt werden müssen. Das Durchführen des Schweißvorgangs kann zu ungewollten Schwächungen der Struktur der Turmwand im Rahmen der Betriebsdauer der Windenergieanlage führen, die zu einer Verletzung geltender Sicherheitsstandards führen können.

Es lag daher der Erfindung die Aufgabe zugrunde, bei einer Stahlturmsektion einer Windenergieanlage der eingangs bezeichneten Art eine Möglichkeit zu ermitteln, die vorstehend beschriebenen Nachteile möglichst weitgehend zu überwinden. Insbesondere lag der Erfindung die Aufgabe zugrunde, eine Möglichkeit anzugeben, die Wand der Stahlturmsektion konstruktiv sicherer gegen Ausbeulungen, insbesondere Ovalisierung, auszubilden, ohne die strukturelle Integrität der Turmwand zu gefährden. Weiter lag der Erfindung insbesondere die Aufgabe zugrunde, eine solche Möglichkeit anzugeben, die technisch und wirtschaftlich, auch im Rahmen des Betriebes, umsetzbar ist.

Die Erfindung löst die ihr zugrundeliegende Aufgabe bei einer Stahlturmsektion der eingangs bezeichneten Art, indem diese gemäß den Merkmalen von Anspruch 1 ausgebildet ist. Insbesondere wird vorgeschlagen, dass eine Manschette im Inneren der Stahlturmsektion auf der vorbestimmten Höhe angeordnet ist, und einen ringförmigen Trägerkörper mit einem Außendurchmesser aufweist, welcher geringer ist als der Innendurchmesser, sowie mehrere umfänglich am Trägerkörper verteilt angeordnete Druckelemente, die sich in radialer Richtung am Trägerkörper einerseits und an dem Innendurchmesser der Wand andererseits abstützen und die Stahlturmsektion versteifen. Die Erfindung folgt dem Ansatz, dass das Versteifen der Turmwand von innen heraus nicht zwingend mittels einer stoffschlüssigen Verbindung der Turmwand mit einer Versteifungsscheibe oder einem versteifenden Ringelement erfolgen muss, sondern dass die Versteifung auch erfolgen kann, indem die Turmwand lediglich von innen her in radialer Richtung mit einer abstützenden Druckkraft durch die Druckelemente unterstützt wird, die sich in radialer Richtung gegen die Turmwand stemmen. Dadurch tragen die Druckelemente dazu bei in radialer Richtung gegen die Turmwand eine zusätzliche Verformung, insbesondere Ovalisierung, der tragenden Struktur zu verhindern.

Ein wesentlicher Vorteil der Erfindung wird darin gesehen, dass der ringförmige Trägerkörper sowohl für Retrofit-Einsätze geeignet ist, also in bereits bestehende Windenergieanlagen konventioneller Bauart nachträglich eingebaut werden kann, und auch bereits vor oder bei Errichtung der Windenergieanlage in der Stahlturmsektion eingebaut sein kann. Da der Trägerkörper mit seinen Druckelemente nicht in das Material der Turmwand eingreift, wird die strukturelle Integrität der Turmwand durch das Einbauen des Trägerkörpers und seiner Druckelemente nicht negativ beeinflusst. Gleichzeitig konnte gezeigt werden, dass die Druckelemente, wenn sie an der Turmwand anliegen, effektiv das Ausbeulen, insbesondere Ovalisieren, der Stahlturmsektion vermindern, sodass sicherheitskritische Effekte an der tragenden Struktur im Turm der Windenergieanlage, wie beispielsweise dem vorgenannten Podest, und auch ein Ausbeulen der Tragstruktur, nur noch vermindert, bestenfalls gar nicht mehr, auftreten können.

Dadurch ist die erfindungsgemäße Versteifungsmaßnahme zeit- und kosteneffizient einsetzbar und führt zu einer Erhöhung der Standsicherheit der Windenergieanlage innerhalb ihrer Betriebsdauer.

Dadurch, dass der ringförmige Trägerkörper mit den Druckelemente auch bereits vor dem Errichten der Stahlturmsektion auf dem Turm der Windenergieanlage eingebaut werden kann, ist es beispielsweise möglich, den ringförmigen Trägerkörper und die Druckelemente bereits in die Stahlturmsektion einzubauen, wenn diese noch auf der Seite liegt, entweder im Werk oder am Errichtungsort. Durch das Einbauen des Trägerkörpers kann die Grundform der Stahlturmsektion bereits in diesem Stadium durch die abstützende Wirkung der Druckelemente in der vorgesehenen Form gehalten werden, sodass auch etwaige Podeste oder andere strukturelle Einheiten im Inneren der Stahlturmsektion installiert werden können. Es ist diesbezüglich beobachtet worden, dass ohne Vorsehen versteifender Maßnahmen die Stahlturmsektion in liegender Stellung leicht infolge der Schwerkraft verformt wird. Die umlaufenden Strukturen, die in die Stahlturmsektion eingebaut werden, werden dann in einen leicht verzogenen Grundkörper der Stahlturmsektion eingebaut und mit diesem befestigt. Wird dann die Stahlturmsektion aufgestellt, bildet sich die Verformung, die infolge der Schwerkraft zuvor bestand, zurück, und es werden asymmetrisch Kräfte zwischen der umlaufenden Struktur, wie beispielsweise einem Podest, und der Wand der Stahlturmsektion bewirkt, die zu einer Belastung und potentiell Überlastung etwaiger Schraubverbindungen zwischen umlaufender Struktur und Turmwand führen können. Auch diesem Risiko wird mittels des ringförmigen Trägerkörpers erfolgreich entgegengewirkt, auch wenn die Stahlturmsektion noch nicht mit der Gondel belastet ist.

In einer bevorzugten Weiterbildung ist der Trägerkörper an eine umlaufende Struktur der Stahlturmsektion angehängt oder auf die umlaufende Struktur der Stahlturmsektion aufgesetzt. Die umlaufende Struktur kann in bevorzugten Ausführungsformen beispielsweise ein Podest sein, oder ein Kopf- oder Fußflansch der Stahlturmsektion. Der Trägerkörper muss nicht vollständig umlaufend mit dieser umlaufenden Struktur verbunden sein, sondern es genügt eine punktuelle Anbindung an die Struktur an verschiedenen Punkten entlang ihres Umfangs. Die Struktur selbst muss auch in diesem Sinne nicht vollständig umlaufend ausgebildet sein, die umlaufende Struktur kann auch aus mehreren nur teilweise umlaufenden Elementen bestehen, die ein Anbinden des Trägerkörpers ermöglichen.

In einer weiteren bevorzugten Ausführungsform ist der Trägerkörper aus mehreren Trägersegmenten ausgebildet, wobei in Umfangsrichtung benachbarte Trägersegmente miteinander verbunden sind, vorzugsweise kraft- oder formschlüssig.

Beispielsweise kann der Trägerkörper aus drei, vier, sechs oder mehr Segmenten bestehen, die sich jeweils über einen Teil des Umfangs des Trägerkörpers erstrecken, und die entweder vorher, oder vorzugsweise innerhalb der Stahlturmsektion zu dem Trägerkörper zusammengesetzt werden. Das erleichtert den Transport des Trägerkörpers zu einer Stahlturmsektion, die bereits auf dem Turm der Windenergieanlage installiert ist. Die Verbindung der Trägersegmente miteinander kann beispielsweise mittels Schraubverbindungen erfolgen, was auch ein nachträgliches Abbauen oder Revisionieren des Trägerkörpers erleichtert. Alternativ können die Trägersegmente auch formschlüssig miteinander verbunden werden, oder, sofern abzusehen ist, dass eine nachträgliche Revision nicht nötig wird, auch stoffschlüssig, beispielsweise mittels Schweißen. Da die Struktur des Trägerkörpers kein integraler Bestandteil der Wand der Stahlturmsektion ist, sind Schweißarbeiten an der Trägerstruktur nicht im gleichen Maße sicherheitskritisch wie sie es an der Turmwand wären.

Die Druckelemente sind vorzugsweise stoffschlüssig, insbesondere reibschlüssig, an der Turmwand angeordnet. Zum Unterstützen der Haftwirkung können die Druckelemente auch mit Haftmittel versehen sein, die ein Haften des Druckelements an der Turmwand begünstigen.

In einer weiteren bevorzugten Ausführungsform weist der Trägerkörper einen Hohlquerschnitt auf, vorzugsweise einen polygonalen Querschnitt, besonders bevorzugt einen rechteckigen Querschnitt. Unter dem Hohlquerschnitt des Trägerkörpers ist vorzugsweise zu verstehen, dass der Querschnitt in einer Ebene liegt, deren Normale in Umfangsrichtung zeigt, also tangential zum Trägerkörper verläuft. Der Trägerkörper kann beispielsweise ein Vierkant-Stahlprofil aufweisen. Was die Gesamtform des Rings des Trägerkörpers anbelangt, so ist der Trägerkörper vorzugsweise an die Querschnittsform der Stahlturmsektion angepasst ausgebildet. Ist die Stahlturmsektion zylindrisch ausgebildet, ist vorzugsweise auch der Trägerkörper zylindrisch ausgebildet. Ist die Stahlturmsektion polygonal ausgebildet, ist der Trägerkörper vorzugsweise ebenfalls mit einem gleichrangigen polygonalen Querschnitt ausgebildet.

Hierdurch wird gewährleistet, dass auch stärkere Verformungen der Stahlturmsektion noch durch die Druckelemente ausgeglichen bzw. vermieden werden können, und es wird zudem möglich, die Anbringungshöhe des ringförmigen Trägerkörpers und der Druckelemente in einem gewissen Band zu variieren, was zu einer signifikanten Ökonomisierung in der Herstellung und Vorhaltung von Trägerkörpern zur Aussteifung von Stahlturmsektionen für Windenergieanlagen führt.

In einer weiteren bevorzugten Ausführungsform sind die Druckelemente dazu eingerichtet, von einer Installationsposition, in welcher die Druckelemente an ihrem radial äußeren Ende einen Außendurchmesser einnehmen, der geringer ist als der Innendurchmesser der Stahlturmsektion auf der vorbestimmten Höhe, in einer Versteifungsposition bewegt zu werden, in welcher die Druckelemente an der Stahlturmsektion anliegen. Das heißt, dass in der Versteifungsposition die Druckelemente mit ihrem Außendurchmesser am Innendurchmesser der Wand der Stahlturmsektion auf der vorbestimmten Höhe anliegen. Die Druckelemente können am ringförmigen Trägerkörper bereits vorinstalliert sein, wenn der Trägerkörper, oder seine Segmente, in das Innere der Stahlturmsektion verbracht werden, oder erst am Installationsort in den Trägerkörper eingeführt werden.

In einer weiteren bevorzugten Ausführungsform sind die Druckelemente individuell bewegbar an dem Trägerkörper angeordnet. Hierdurch wird es möglich, auf individuelle Formveränderungen der Stahlturmsektion Rücksicht zu nehmen, und auch fertigungsbedingte Toleranzen entsprechend kompensieren zu können.

In einer weiteren bevorzugten Ausführungsform sind die Druckelemente dazu eingerichtet, in der Versteifungsposition eine Druckkraft auf die Stahlturmsektion auszuüben. Sofern die Druckelemente im unverformten Zustand der Stahlturmsektion bereits in ihre Versteifungsposition gebracht werden, ist es in der Regel nicht zwingend nötig, eine signifikante Druckkraft aufzubauen. Ein sicheres Anliegen an der Wand der Stahlturmsektion ist in der Regel ausreichend, die Druckkraft entsteht dann potentiell als Widerlagerkraft bei einer Krafteinleitung in die Stahlturmsektion. In der Versteifungsposition sind jedenfalls die Druckelemente vorzugsweise dergestalt am Trägerkörper arretiert, dass sie die Druckkraft auf die Stahlturmsektion entweder als Aktions- oder Reaktionskraft ausüben können, ohne aus der Versteifungsposition verdrängt zu werden.

Die Druckelemente sind in einer bevorzugten Ausführungsform als Druckstangen ausgebildet. Alternativ oder zusätzlich können Druckelemente verwendet werden, die als hydraulisch oder pneumatisch betätigte Druckkissen oder Druckkolben ausgebildet sind.

In einer weiteren bevorzugten Ausführungsform sind die Druckelemente mit dem Trägerkörper mittels einer Schraubverbindung verbunden. Die Schraubverbindung vereint gleich mehrere Vorteile in sich: Es ist durch Verdrehen der Druckelemente relativ zum Trägerkörper möglich, die Druckelemente aus der Installationsposition in die Versteifungsposition zu bewegen. Gleichzeitig lassen sich Schraubverbindungen durch Verwenden von Kontermuttern etc. mechanisch recht einfach und ohne großen Geräteaufwand in der Versteifungsposition arretieren. Zugleich ist eine derartige Lösung kostengünstig umsetzbar.

Es lässt sich durch die Kontrolle des Drehwinkels der Schraubverbindung auch recht genau und stufenlos die Anpassung an den vorbestimmten Innendurchmesser auf der vorbestimmten Höhe erreichen.

In einer weiter bevorzugten Ausführungsform weisen die Druckelemente an dem radial äußeren Ende einen Stützfuß zur Anlage an der Wand der Stahlturmsektion auf. Der Stützfuß kann beispielsweise partiell oder vollständig aus Kunststoff ausgebildet sein und ein elastisches Formänderungsvermögen aufweisen, das eine möglichst gute Anlage des Druckelements an der Turmwand bietet und eine Verteilung der Druckkraft auf eine möglichst große Auflagefläche bietet.

In einer weiteren bevorzugten Ausführungsform weisen die Druckelemente jeweils Verriegelungsmittel zum Arretieren der Druckelemente in der Versteifungsstellung auf. Bei Schraubverbindungen sind die Verriegelungsmittel, wie vorstehend beschrieben, beispielsweise Kontermuttern. Alternativ oder zusätzlich kann das Gewinde der Schraubverbindung auch als selbsthemmendes Gewinde ausgebildet sein.

In einer weiteren bevorzugten Ausführungsform ist die Manschette eine erste Manschette, und die Stahlturmsektion weist eine oder mehrere weitere Manschetten auf, die jeweils auf vorbestimmten Höhen der Stahlturmsektion angeordnet sind, wobei vorzugsweise auch die eine oder mehreren weiteren Manschetten nach einer der vorstehend beschriebenen bevorzugten Ausführungsformen ausgebildet sind. Dadurch, dass die Manschette ein separates Bauteil ist, was nicht integral mit der Turmwand verbunden werden muss, sind der Anbringungsort und die Anzahl der angebrachten Manschetten stark flexibel und können an die jeweiligen Lastsituationen optimal angepasst werden.

Die Erfindung wurde vorstehend in einem ersten Aspekt unter Bezugnahme auf die Windenergieanlagen-Stahlturmsektion selbst beschrieben. In einem zweiten Aspekt betrifft die Erfindung ferner zusätzlich einen Turm einer Windenergieanlage, mit einer Stahlturmsektion, die dazu eingerichtet ist, eine mittels einer Drehverbindung auf dem Turm drehbaren Gondel zu tragen, und einem unterhalb der Gondel, vorzugsweise in der Stahlturmsektion, angeordneten Podest, vorzugsweise einem Liftausstiegspodest. Die Erfindung löst die ihr zugrundeliegende Aufgabe bei dem vorgenannten Turm, indem in der Stahlturmsektion, vorzugsweise zwischen der Gondel und dem Podest, eine oder mehrere Manschetten angeordnet sind, und die Stahlturmsektion versteifen, sodass die Stahlturmsektion nach einer der vorstehend beschriebenen bevorzugten Ausführungsformen des ersten Aspekts ausgebildet ist.

Die Erfindung macht sich hinsichtlich des Turms der Windenergieanlage dieselben Vorteile und Erwägungen zunutze wie die Stahlturmsektion selbst. Bevorzugte Ausführungsformen der Stahlturmsektion sind zugleich bevorzugte Ausführungsformen des Turms und umgekehrt, weswegen zur Vermeidung von Wiederholungen diesbezüglich auf die obigen Ausführungen verwiesen wird.

In einem weiteren Aspekt betrifft die Erfindung eine Windenergieanlage, mit einem Turm, und einer mittels einer Drehverbindung drehbar auf dem Turm getragenen Gondel. Die Erfindung löst die ihr zugrundeliegende Aufgabe bei einer solchen Windenergieanlage, indem der Turm nach einer der vorstehend beschriebenen bevorzugten Ausführungsformen ausgebildet ist, und/oder indem die Windenergieanlage eine Stahlturmsektion nach einer der vorstehend beschriebenen bevorzugten Ausführungsformen aufweist.

Auch in diesem Aspekt macht sich die Erfindung dieselben Vorteile und Erwägungen zunutze wie die erfindungsgemäße Stahlturmsektion des ersten Aspekts, weswegen auch diesbezüglich bevorzugte Ausführungsformen der Stahlturmsektion zugleich bevorzugte Ausführungsformen der Windenergieanlage sind und umgekehrt, sodass wiederum zur Vermeidung von Wiederholungen auf die vorstehenden Ausführungen verwiesen wird.

In einem weiteren Aspekt betrifft die Erfindung eine Manschette zur Versteifung einer Windenergieanlagen-Stahlturmsektion, vorzugsweise einer Windenergieanlagen-Stahlturmsektion nach einer der vorstehend beschriebenen bevorzugten Ausführungsformen, mit einem ringförmigen Trägerkörper, der dazu eingerichtet ist, im Inneren der Stahlturmsektion auf einer vorbestimmten Höhe angeordnet zu werden, und einem Außendurchmesser, welcher geringer ist als ein Innendurchmesser der Stahlturmsektion auf der vorbestimmten Höhe, sowie mehrere umfänglich am Ringkörper verteilt angeordnete Druckelemente aufweist, die dazu eingerichtet sind, sich in radialer Richtung am Trägerkörper einerseits und an dem Innendurchmesser der Wand andererseits abzustützen und die Stahlturmsektion zu versteifen.

Die Erfindung macht sich auch hinsichtlich der Manschette dieselben Vorteile und Erwägungen zunutze wie die Stahlturmsektion des ersten Aspekts der Erfindung. Bevorzugte Ausführungsformen der Stahlturmsektion sind zugleich bevorzugte Ausführungsformen der Manschette und umgekehrt.

So ist in einer bevorzugten Weiterbildung der Trägerkörper dazu eingerichtet, an eine umlaufende Struktur der Stahlturmsektion angehängt zu werden, oder auf die umlaufende Struktur der Stahlturmsektion aufgesetzt zu werden.

In einer weiteren bevorzugten Ausführungsform ist der Trägerkörper aus mehreren Trägersegmenten ausgebildet, wobei in Umfangsrichtung benachbarte Trägersegmente vorzugsweise kraft- oder formschlüssig miteinander verbunden sind.

In einer weiteren bevorzugten Ausführungsform weist der Trägerkörper einen Hohlquerschnitt auf, vorzugsweise einen polygonalen Querschnitt, besonders bevorzugt einen rechteckigen Querschnitt.

In einer weiteren bevorzugten Ausführungsform sind die Druckelemente dazu eingerichtet, von einer Installationsposition, in welcher die Druckelemente an ihrem radial äußeren Ende einen Außendurchmesser einnehmen, der geringer ist als der Innendurchmesser der Stahlturmsektion auf der vorbestimmten Höhe, in eine Versteifungsposition bewegt zu werden, in welcher die Druckelemente an der Stahlturmsektion anliegen.

In einer weiteren bevorzugten Ausführungsform sind die Druckelemente individuell bewegbar an dem Trägerkörper angeordnet.

In einer weiteren bevorzugten Ausführungsform sind die Druckelemente dazu eingerichtet, in der Versteifungsposition eine Druckkraft auf die Stahlturmsektion auszuüben.

In einer weiteren bevorzugten Ausführungsform sind die Druckelemente mit dem Trägerkörper mittels einer Schraubverbindung verbunden.

In einer weiteren bevorzugten Ausführungsform weisen die Druckelemente an ihrem radial äußeren Ende einen Stützfuß zur Anlage an der Wand der Stahlturmsektion auf.

In einer weiteren bevorzugten Ausführungsform weisen die Druckelemente jeweils Verriegelungsmittel zum Arretieren in der Versteifungsstellung auf.

Hinsichtlich weiterer Vorteile und Erläuterungen zu den vorstehend beschriebenen bevorzugten Ausführungsformen wird ergänzend auf die Ausführungen zur Stahlturmsektion gemäß dem ersten Aspekt der Erfindung verwiesen.

In einem weiteren Aspekt betrifft die Erfindung ein Verfahren zum Versteifen einer Stahlturmsektion einer Windenergieanlage, insbesondere einer Turmkopfsektion.

Die Erfindung löst die ihr zugrundeliegende Aufgabe auch bei einem solchen Verfahren, indem das Verfahren die Schritte umfasst:
Anordnen eines ringförmigen Trägerkörpers auf einer vorbestimmten Höhe in der Stahlturmsektion, wobei die Stahlturmsektion auf der vorbestimmten Höhe einen Innendurchmesser aufweist, und der Trägerkörper einen Außendurchmesser aufweist, welcher geringer ist als jener Innendurchmesser, und
Einführen mehrerer Druckelemente in die Stahlturmsektion, entweder gemeinsam mit dem Trägerkörper oder separat dazu, so dass die Druckelemente umfänglich am Ringkörper verteilt angeordnet sind und sich in radialer Richtung am Träger-körper einerseits und an dem Innendurchmesser der Wand andererseits abstützen und die Wand versteifen.

Die Erfindung macht sich auch hinsichtlich des Verfahrens dieselben Erwägungen und Vorteile zunutze wie bei der Stahlturmsektion des ersten Aspekts. Bevorzugte Ausführungsformen der Stahlturmsektion des ersten Aspekts sind somit zugleich bevorzugte Ausführungsformen des Verfahrens und umgekehrt, weswegen zur Vermeidung von Wiederholungen auf die obigen Ausführungen verwiesen wird.

In einer bevorzugten Weiterbildung des Verfahrens umfasst der Schritt des Anordnens des Trägerkörpers ein Anhängen an, oder Aufsetzen auf, eine umlaufende Struktur der Stahlturmsektion.

In einer bevorzugten Ausführungsform umfasst der Schritt des Anordnens des Trägerkörpers ein Verbinden mehrerer in Umfangsrichtung benachbarter Trägersegmente zu dem Trägerkörper, wobei vorzugsweise die Segmente kraft- oder formschlüssig miteinander verbunden werden.

In einer weiteren bevorzugten Ausführungsform umfasst das Verfahren einen Schritt des Bewegens der Druckelemente von einer Installationsposition, in welcher die Druckelemente an ihrem radial äußeren Ende einen Außendurchmesser einnehmen, der geringer ist als der Innendurchmesser der Stahlturmsektion auf der vorbestimmten Höhe, in eine Versteifungsposition, in welcher die Druckelemente an der Stahlturmsektion anliegen, wobei die Druckelemente vorzugsweise individuell bewegt werden, und/oder in der Versteifungsposition eine Druckkraft auf die Stahlturmsektion ausüben.

In einer weiteren bevorzugten Ausführungsform werden die Druckelemente mittels einer Schraubverbindung mit dem Trägerkörper verbunden.

In einer weiteren bevorzugten Ausführungsform des Verfahrens werden die Schritte des Verfahrens durchgeführt, bevor die Gondel auf der Windenergieanlage installiert wird, und/oder bevor die Stahlturmsektion auf dem Turm der Windenergieanlage installiert wird. Alternativ werden die Schritte des Verfahrens vorzugsweise durchgeführt, nachdem die Stahlturmsektion und/oder die Gondel der Windenergieanlage installiert wurden. Das erfindungsgemäße Verfahren kann mit Vorteil sowohl bei der Vorbereitung der Installation der Windenergieanlage eingesetzt werden, als auch im Retrofit bei der Wartung der Windenergieanlage im laufenden Betrieb bzw. während der Lebensdauer der installierten Windenergieanlage.

Um etwaige Formänderungen durch dynamische Belastungen des Turms der Windenergieanlage auszuschließen, kann es vorteilhaft sein, die Windanlage für die Dauer der Installation des versteifenden Trägerkörpers und seiner Druckelemente zu stoppen.

Schließlich betrifft die Erfindung in einem weiteren Aspekt die Verwendung einer Manschette zum Versteifen einer Stahlturmsektion einer Windenergieanlage, wobei die Manschette nach einer der vorstehend beschriebenen bevorzugten Ausführungsformen des ersten Aspekts ausgebildet ist.

Die Erfindung wird im Folgenden unter Bezugnahme auf die beigefügten Figuren anhand eines bevorzugten Ausführungsbeispiels näher beschrieben. Hierbei zeigen:
- Fig. 1: eine schematische räumliche Darstellung einer Windenergieanlage gemäß einem bevorzugten Ausführungsbeispiel,
- Fig. 2: eine schematische geschnittene Draufsicht auf eine Stahlturmsektion der Windenergieanlage gemäß Fig. 1, und
- Fig. 3: eine teilweise geschnittene Seitenansicht der Stahlturmsektion gemäß Fig. 2.

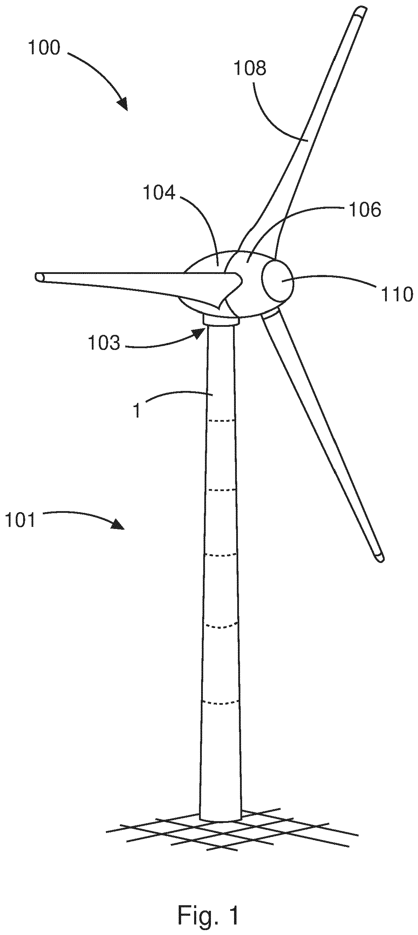

Fig. 1 zeigt eine schematische Darstellung einer Windenergieanlage gemäß der Erfindung. Die Windenergieanlage 100 weist einen Turm 101 und eine mittels einer Drehverbindung 103 drehbar auf einer Kopfsektion 1 des Turms 101 gelagerten Gondel 104 auf.

Die Stahlturmsektion 1 ist eine Stahlturmsektion, weitere Sektionen können ebenfalls als Stahlturmsektionen, in Hybridbauweise oder als Betonturmsektionen ausgebildet sein. Die Drehverbindung wird auch als Azimutlager bezeichnet. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

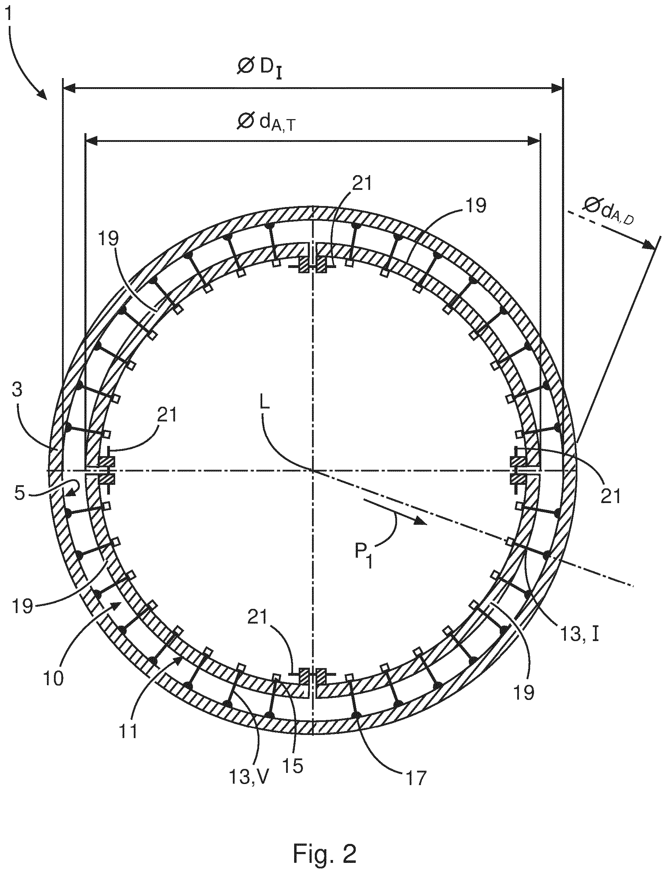

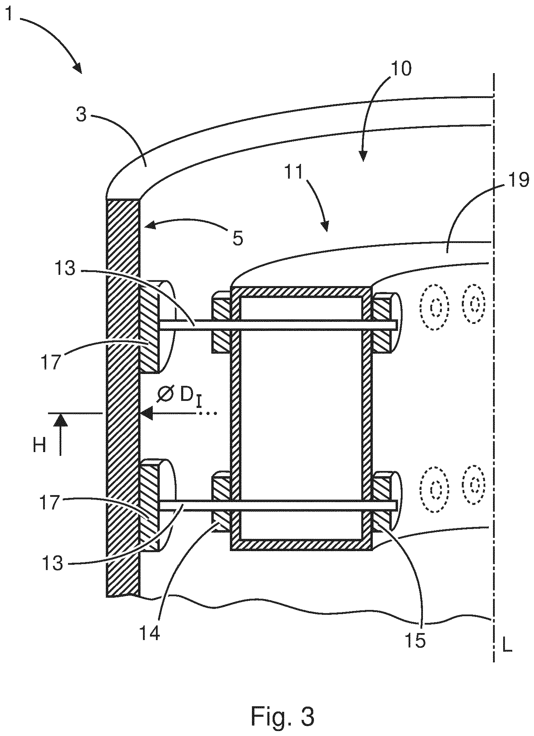

In Fig. 2 und Fig. 3 ist die Stahlturmsektion 1 des bevorzugten Ausführungsbeispiels der Erfindung in Querschnitt in Richtung einer Längsachse L der Stahlturmsektion 1 gezeigt. Die Querschnittsebene verläuft im Wesentlichen in einer horizontalen Ebene.

Die Stahlturmsektion 1 weist eine Wand 3 mit einer Innenfläche 5 auf. Im Inneren der Stahlturmsektion 1 ist eine Manschette 10 mit einem ringförmigen Trägerkörper 11 angeordnet. Während die Wand 3 an ihrer Innenfläche 5 einen Innendurchmesser D_{I} aufweist, weist der Trägerkörper 11 einen Außendurchmesser d_{AT} auf, der kleiner ist als der Innendurchmesser D_{I} der Wand 3.

An dem Trägerkörper 11 der Manschette 10 ist eine Vielzahl von Druckelemente 13 angeordnet, die individuell beweglich am Trägerkörper 11 angeordnet sind. Die Druckelemente 13 sind vorzugsweise als Druckstangen ausgebildet, etwa als Gewindestangen, und mittels einer Schraubverbindung 14 (siehe Fig. 3) mit dem Trägerkörper 11 verbunden. Die Funktionsweise ist analog auf andere Druckelemente zu übertragen, beispielsweise auf Druckkissen.

Exemplarisch ist ein Druckelement 13 in einer Installationsstellung I gezeigt, in welcher das radial äußere Ende des Druckelements 13 einen Außendurchmesser d_{AD} aufweist, der ebenfalls geringer als der Innendurchmesser D_{I} der Wand 3 ist. Wird das Druckelement 13 mittels Drehen relativ zu der Schraubverbindung 14 in Richtung des Pfeils P₁ verstellt, kommt es irgendwann in dieselbe Stellung, in der die anderen Druckelemente 13 in Fig. 2 bereits abgebildet sind, nämlich in Anlage mit der Innenfläche 5 der Wand 3, wo dann bei entsprechender Fortsetzung der Verdrehbewegung eine Druckkraft aufgebaut werden kann, oder bei Verformung der Wand 3 der Stahlturmsektion 1 eine Druckkraft im Wege einer Reaktionskraft auftritt. Durch die Vielzahl der Druckelemente 13 wird eine Stabilisierung der Wand 3 entlang ihres gesamten Umfangs erreicht. Zur Vergrößerung der Krafteintragungsfläche sind vorzugsweise Stützfüße 17 an den Druckelemente 13 ausgebildet, die, vorzugsweise reibschlüssig, mit der Innenfläche 5 der Wand 3 in Kontakt stehen, wenn sich die Druckelemente 13 in ihrer Verriegelungsstellung V befinden.

Der Trägerkörper 11 ist in der gezeigten Ausführungsform aus mehreren Trägersegmenten 19 zusammengesetzt, die jeweils in Umfangsrichtung benachbart zueinander angeordnet und mittels einer Schraubverbindung 21 kraftschlüssig miteinander verbunden sind.

Durch die Stabilisierung der Wand 3 der Stahlturmsektion 1 wird einer Verformung, insbesondere Ovalisierung, der Wand 3 der Stahlturmsektion 1 effektiv entgegengewirkt.

Je näher die Manschette 10 an der Drehverbindung 103 angeordnet wird, desto größer ist die Stabilisierungswirkung in der Region der Drehverbindung 103, und umso sicherer wird einer Verformung und Beschädigung der Drehverbindung 103 entgegengewirkt. Je näher die Manschette 10 an einem (nicht dargestellten) Podest oder ähnlichen umlaufenden Strukturen im Inneren der Stahlturmsektion 1 angeordnet wird, desto größer wird die Stabilisierungswirkung für jene Bauteile.

Demzufolge ist es auch möglich, mehrere Manschetten 10 innerhalb der Stahlturmsektion 1 vorzusehen, um jeweils diejenigen Funktionsbauteile besonders zu schützen, die eine Verformung, insbesondere Ovalisierung, der Wand 3 der Stahlturmsektion 1 nicht vertragen würden.

Wie sich aus Fig. 3 ergibt, müssen die Druckelemente nicht lediglich in Umfangsrichtung benachbart zueinander angeordnet werden, sondern können auch in Richtung der Längsachse L der Stahlturmsektion 1 zueinander beabstandet und/oder versetzt angeordnet werden. Fig. 3 zeigt ein Ausführungsbeispiel mit einer zweireihigen Anordnung von Druckelemente 13 entlang des Umfangs des Trägerkörpers 11.

Zur Verriegelung des Druckelements 13 in seiner Verriegelungsposition V weist die Manschette 10 vorzugsweise Verriegelungsmittel 15 auf, die im gezeigten Ausführungsbeispiel etwa als Kontermuttern ausgebildet sein können. Die Verriegelungsmittel können alternativ auch als Schraubensicherungen allgemein bekannter Art umgesetzt werden, und anstelle von Gewindestangen können auch konventionelle Schrauben mit Schraubenköpfen eingesetzt werden.

Der Umstand, dass der ringförmige Trägerkörper 11 den Außendurchmesser d_{AT} aufweist, welcher geringer ist als der Innendurchmesser D_{I} der Wand 3, erlaubt zudem eine gewisse Variabilität der Einbauhöhe um die Höhe H herum, an welcher die Wand 3 den Durchmesser D_{I} aufweist, jeweils unter der Annahme, dass die Stahlturmsektion 1 zumindest partiell nach oben hin konisch verjüngt ausgebildet ist, und D_{I} mit zunehmender Höhe abnimmt. So kann eine geringe Anzahl von in Form von Fertigbauteilen vorgehaltener Trägerkörper große Höhenbereiche der Stahlturmsektion abdecken, was zu einer kostengünstigen und gleichzeitig flexiblen Umsetzung führt.

Die erfindungsgemäße Manschette 10 ist in den Figuren 2, 3 in einem errichteten Turm 101 gezeigt. Die Manschette kann aber auch in liegenden Stahlturmsektionen 1 verwendet werden, um ungewollte Deformationen bei Lagerung, Transport und/oder Montage zu limitieren oder bestenfalls zu eliminieren. Die Manschette 10 kann nachträglich im Inneren der Stahlturmsektion eingebaut werden, oder bereits bei der Errichtung des Turms 101 der Windenergieanlage 100, und stellt eine sichere, zeit- und kosteneffiziente Alternative zu eingeschweißten Versteifungsscheiben und dergleichen dar.

### Bezugszeichenliste

- 1: Kopfsektion
- 3: Wand
- 5: Innenfläche
- 10: Manschette
- 11: Trägerkörper
- 13: Druckelemente
- 14: Schraubverbindung, Druckelement
- 15: Verriegelungsmittel
- 17: Stützfuß
- 19: Trägersegment
- 21: Schraubverbindung, Trägersegment
- 100: Windenergieanlage
- 101: Turm
- 103: Drehverbindung
- 104: Gondel
- 106: Rotor
- 108: Rotorblatt
- 109: Rotorblattwurzel
- 110: Spinner
- D_{I}: Innendurchmesser
- d_{AT}: Außendurchmesser
- d_{AD}: Außendurchmesser (Druckelement)
- I: Installationsstellung
- L: Längsachse
- P₁: Pfeil
- V: Verriegelungsstellung

## Patentansprüche

1. Windenergieanlagen-Stahlturmsektion (1), vorzugsweise Turmkopfsektion,
mit einer Wand (3), die auf einer vorbestimmten Höhe (H) einen Innendurchmesser (D_{I}) aufweist,
**dadurch gekennzeichnet, dass** eine Manschette (10) im Inneren der Stahlturmsektion (1) auf der vorbestimmten Höhe (H) angeordnet ist, und einen ringförmigen Trägerkörper (11) mit einem Außendurchmesser (d_{AT}) aufweist, welcher geringer ist als der Innendurchmesser (D_{I}), sowie mehrere umfänglich am Trägerkörper (11) verteilt angeordnete Druckelemente (13), die sich in radialer Richtung am Trägerkörper (11) einerseits und an dem Innendurchmesser (D_{I}) der Wand (3) andererseits abstützen und die Stahlturmsektion (1) versteifen.

2. Windenergieanlagen-Stahlturmsektion (1) nach Anspruch 1,
**dadurch gekennzeichnet, dass** der Trägerkörper (11) an eine umlaufende Struktur der Stahlturmsektion (1) angehängt ist oder auf die umlaufende Struktur der Stahlturmsektion (1) aufgesetzt ist.

3. Windenergieanlagen-Stahlturmsektion (1) nach Anspruch 1 oder 2,
**dadurch gekennzeichnet, dass** der Trägerkörper (11) aus mehreren Trägersegmenten (19) ausgebildet ist, wobei in Umfangsrichtung benachbarte Trägersegmente (19) vorzugsweise kraft- oder formschlüssig miteinander verbunden sind.

4. Windenergieanlagen-Stahlturmsektion (1) nach einem der vorstehenden Ansprüche,
**dadurch gekennzeichnet, dass** der Trägerkörper (11) einen Hohlquerschnitt aufweist, vorzugsweise einen polygonalen Querschnitt, besonders bevorzugt einen rechteckigen Querschnitt.

5. Windenergieanlagen-Stahlturmsektion (1) nach einem der vorstehenden Ansprüche,
**dadurch gekennzeichnet, dass** die Druckelemente (13) dazu eingerichtet sind, von einer Installationsposition (I), in welcher die Druckelemente (13) an ihrem radial äußeren Ende einen Außendurchmesser (d_{AD}) einnehmen, der geringer ist als der Innendurchmesser (D_{I}) der Stahlturmsektion (1) auf der vorbestimmten Höhe (H), in eine Versteifungsposition (V) bewegt zu werden, in welcher die Druckelemente (13) an der Stahlturmsektion (1) anliegen.

6. Windenergieanlagen-Stahlturmsektion (1) nach einem der vorstehenden Ansprüche,
**dadurch gekennzeichnet, dass** die Druckelemente (13) individuell bewegbar an dem Trägerkörper (11) angeordnet sind.

7. Windenergieanlagen-Stahlturmsektion (1) nach Anspruch 5 oder 6,
**dadurch gekennzeichnet, dass** die Druckelemente (13) dazu eingerichtet sind, in der Versteifungsposition (V) eine Druckkraft auf die Stahlturmsektion (1) auszuüben.

8. Windenergieanlagen-Stahlturmsektion (1) nach einem der vorstehenden Ansprüche,
**dadurch gekennzeichnet, dass** die Druckelemente (13) mit dem Trägerkörper (11) mittels einer Schraubverbindung (14) verbunden sind.

9. Windenergieanlagen-Stahlturmsektion (1) nach einem der vorstehenden Ansprüche,
**dadurch gekennzeichnet, dass** die Druckelemente (13) an ihrem radial äußeren Ende einen Stützfuß (17) zur Anlage an der Wand (3) der Stahlturmsektion (1) aufweisen.

10. Windenergieanlagen-Stahlturmsektion (1) nach einem der vorstehenden Ansprüche,
**dadurch gekennzeichnet, dass** die Druckelemente (13) jeweils Verriegelungsmittel (15) zum Arretieren der Druckelemente (13) in der Versteifungsstellung (V) aufweisen.

11. Windenergieanlagen-Stahlturmsektion (1) nach einem der vorstehenden Ansprüche,
**dadurch gekennzeichnet, dass** die Manschette (10) eine erste Manschette ist, und die Stahlturmsektion (1) eine oder mehrere weitere Manschetten auf jeweils vorbestimmten Höhen der Stahlturmsektion (1) aufweist, wobei vorzugsweise auch die ein oder mehreren weiteren Manschetten mit den Merkmalen eines, mehrerer oder sämtlicher der Ansprüche 1 bis 10 ausgebildet sind.

12. Turm (101) einer Windenergieanlage (100), mit
einer Stahlturmsektion (1), die dazu eingerichtet ist, eine mittels einer Drehverbindung (103) auf dem Turm (101) drehbare Gondel (104) zu tragen, und einem unterhalb der Gondel (104), vorzugsweise in der Stahlturmsektion (1), angeordneten Podest, vorzugsweise einem Liftausstiegspodest,
**dadurch gekennzeichnet, dass** in der Stahlturmsektion (1), vorzugsweise zwischen der Gondel (104) und dem Podest, eine oder mehrere Manschetten (10) angeordnet sind und die Stahlturmsektion (1) versteifen, so dass die Stahlturmsektion (1) nach einem der Ansprüche 1 bis 11 ausgebildet ist.

13. Windenergieanlage, mit einem Turm und einer mittels einer Drehverbindung auf dem Turm (101) drehbaren Gondel (104),
**dadurch gekennzeichnet, dass** der Turm (101) nach Anspruch 12 ausgebildet ist.

14. Manschette (10) zur Versteifung einer Windenergieanlagen-Stahlturmsektion (1), vorzugsweise nach einem der Ansprüche 1 bis 11, mit
einem ringförmigen Trägerkörper (11), der dazu eingerichtet ist, im Inneren der Stahlturmsektion (1) auf einer vorbestimmten Höhe (H) angeordnet zu werden, und einen Außendurchmesser (d_{AT}), welcher geringer ist als ein Innendurchmesser (D_{I}) der Stahlturmsektion (1) auf der vorbestimmten Höhe (H), sowie
mehrere umfänglich am Trägerkörper (11) verteilt angeordnete Druckelemente (13) aufweist, die dazu eingerichtet sind, sich in radialer Richtung am Trägerkörper (11) einerseits und an dem Innendurchmesser (D_{I}) der Wand (3) andererseits abzustützen und die Stahlturmsektion (1) zu versteifen.

15. Verfahren zum Versteifen einer Stahlturmsektion (1) einer Windenergieanlage (100), insbesondere einer Turmkopfsektion, umfassend die Schritte:
- Anordnen eines ringförmigen Trägerkörpers (11) auf einer vorbestimmten Höhe (H) in der Stahlturmsektion (1), wobei die Stahlturmsektion (1) auf der vorbestimmten Höhe (H) einen Innendurchmesser (D_{I}) aufweist, und der Trägerkörper (11) einen Außendurchmesser (d_{AT}) aufweist, welcher geringer ist als jener Innendurchmesser (D_{I}), und
- Einführen mehrerer Druckelemente (13) in die Stahlturmsektion (1), entweder gemeinsam mit dem Trägerkörper (11) oder separat dazu, so dass die Druckelemente (13) umfänglich am Trägerkörper (11) verteilt angeordnet sind und sich in radialer Richtung am Trägerkörper (11) einerseits und an dem Innendurchmesser (D_{I}) der Wand andererseits abstützen und die Wand (3) versteifen.

16. Verfahren nach Anspruch 15,
wobei der Schritt des Anordnens des Trägerkörpers (11) ein Anhängen an, oder Aufsetzen auf, eine umlaufende Struktur der Stahlturmsektion (1) umfasst; und/oder wobei der Schritt des Anordnens des Trägerkörpers (11) ein Verbinden mehrerer in Umfangsrichtung benachbarter Trägersegmente (19) zu dem Trägerkörper (11) umfasst, wobei vorzugsweise die Trägersegmente (19) kraft- oder formschlüssig miteinander verbunden werden; und/oder
umfassend einen Schritt des Bewegens der Druckelemente (13) von einer Installationsposition (I), in welcher die Druckelemente (13) an ihrem radial äußeren Ende einen Außendurchmesser (d_{AD}) einnehmen, der geringer ist als der Innendurchmesser (D_{I}) der Stahlturmsektion (1) auf der vorbestimmten Höhe (H), in eine Versteifungsposition (V), in welcher die Druckelemente (13) an der Stahlturmsektion (1) anliegen, wobei die Druckelemente (13) vorzugsweise
individuell bewegt werden, und/oder
in der Versteifungsposition (V) eine Druckkraft auf die Stahlturmsektion (1) ausüben; und/oder
wobei die Druckelemente (13) mittels einer Schraubverbindung (14) mit dem Trägerkörper (11) verbunden werden.

17. Verfahren nach Anspruch 15 oder 16,
wobei die Schritte des Verfahrens durchgeführt werden, bevor die Gondel (104) auf der Windenergieanlage (100) installiert wird und/oder bevor die Stahlturmsektion (1) auf dem Turm (101) der Windenergieanlage (100) installiert wird, oder
wobei die Schritte des Verfahrens durchgeführt werden, nachdem die Stahlturmsektion (1) und/oder die Gondel (104) der Windenergieanlage (100) installiert wurde.

18. Verwendung einer Manschette (10) zum Versteifen einer Stahlturmsektion (1) einer Windenergieanlage (100), wobei die Manschette (10) gemäß Anspruch 14 ausgebildet ist.
